# EUROPEAN PATENT SPECIFICATION

(11) **EP 0 450 044 B1**
(45) Date of publication and mention of the grant of the patent: **03.07.1996**
(21) Application number: 90916297.6
(22) Date of filing: 24.10.1990
(51) Int. Cl.: B60J 3/02, B60Q 3/02, B60R 11/00

(54) **REMOVABLE MIRROR DEVICE MOUNTED INSIDE MOTOR VEHICLES**
ABNEHMBARE SPIEGELVORRICHTUNG FÜR DEN INNENRAUM EINES KRAFTFAHRZEUGES
DISPOSITIF DE MIROIR AMOVIBLE UTILISE A L'INTERIEUR DE VEHICULES AUTOMOBILES

(30) Priority: 26.10.1989 ES 8903609
(43) Date of publication of application: 09.10.1991
(73) Proprietor: FICO I.T.M., S.A., E-08027 Barcelona (ES)
(72) Inventor: GABAS CEBOLLERO, Carlos, E-08029 Barcelona (ES)
(74) Representative: Schwabe - Sandmair - Marx
(86) International application number: PCT/ES90/00039
(87) International publication number: WO 91/06442

(56) References cited:
- EP-A- 0 337 251
- WO-A-85/00028
- DE-A- 274 325
- DE-A- 3 727 346
- US-A- 4 734 831

## Description

The present invention relates to a removable mirror device for motor vehicle interiors, especially in sun visor structures of motor vehicles as defined in the preamble of claim 1 and of the type shown in the Spanish ES-A-2 008 520.

The utility of the so-called vanity mirror mounted in the passenger side sun visor of motor vehicles is well known. Constant technological improvements are being made to said vanity mirror, contributing to increasing both passenger safety and the comfort level offered by the vehicle passenger compartment.

Outstanding among such improvements for its importance and technological complexity is the incorporation of electric illumination means in the mirror itself, allowing its use to be extended independently of the light conditions external thereto, whether it be natural illumination or illumination from the illumination means disposed inside the vehicle which, moreover, are logically for other purposes such as, for example, among others, operations related with the driving of the vehicle or with accommodation of the passengers.

As an example of such mirrors, a mirror being understood to be the reflective surface and the complementary means of assembly and attachment to the sun visor structure, as well as incorporated elements having different functions, there is cited Spanish ES-A-2 008 520, "New mirror for motor vehicle sun visor". In the said example, the mirror comprises a container body provided with a rotating device allowing for discretional occultation of the reflective surface and built-in electric illumination means supplied from the battery normally equipping motor vehicles.

The above mentioned Spanish ES-A-2 008 520, like all known vanity mirrors incorporated in the passenger side sun visor, suffers from the drawback that, under normal conditions of use, it is not possible to extend the use of the mirror as such to the remaining occupants of the vehicle. This is due both to the position occupied by the mirror in the sun visor and to the fact that the mirror, or the support members therefor, is not removable from its housing.

Another mirror device for motor vehicle interiors is known from US-A-4 734 831 and comprises a visor for a vehicle including a vanity mirror assembly which is movable from a stored position within a compartment formed in the visor body to a first use position attached to but extended from the visor body. The vanity mirror assembly can also be detached from the visor for remote use. In a preferred embodiment, the mirror is illuminated by one or more lamps.

With a view to providing a solution responding to the problem of extending on the one hand the use of the vanity mirror, normally located in the passenger side sun visor, to any occupant of the motor vehicle by removal and subsequent replacement of the mirror into its sun visor housing or into any other housing that may be provided and providing on the other hand said vanity mirror with discretionally usable electric illumination means, a removable mirror device for motor vehicle interiors of the type shown in the Spanish ES-A-2 008 520 is disclosed as characterized by the features of claim 1.

This feature of the device of the invention, i.e., the fact that the device is formed by two mutually independent components, allows one or several of said fixed outer frames to be disposed within the motor vehicle located in those places, further to the passenger side sun visor as is traditional, which, either originally or at the user's discretion, are deemed to be appropriate for discretional use as a housing for the removable mirror.

The fact that the illumination means with which the removable mirror of the device of the invention is provided may operate by alternatively using, through the corresponding switching means, the motor vehicle battery and the dry cells incorporated in said removable mirror as sources of power supply, allows the illumination means to be supplied from the motor vehicle battery when the removable mirror is housed in said fixed outer frame, while when the removable mirror is out of its housing in the fixed outer frame said means are supplied by the dry cells incorporated in the removable mirror itself, without any type of connexion or link between the removable mirror and the housing thereof in the fixed outer frame being necessary.

Furthermore, the design of the means switching the electric illumination means with which the removable mirror is provided allows the supply of the said illumination means from the motor vehicle battery to be optional, i.e., several fixed outer frames may be installed and only one or several of them or, even, all of them may be connected to the said battery, which will logically depend on the emplacements contemplated for the fixed outer frames and on the possibilities offered by the vehicle structure itself.

Where the fixed outer frame of the device is not connected to the motor vehicle battery, the removable mirror electric illumination means are supplied exclusively from the dry cells incorporated in the mirror itself.

According to an embodiment of the invention, the fixed outer frame is characterised in that it is one piece, made preferably from plastics materials having mechanical properties appropriate for the contemplated purpose and is formed by an essentially parallelepipedic hollow rectangular receptacle open on one of the larger sides thereof, the front side under conditions of normal use, there being formed on the free edge of said side all around the perimeter thereof a flange of known shape extending externally and perpendicularly to the remaining sides of the parallelepiped forming a dihedron therewith.

One of the outer surfaces of the L-shaped rocking push means, i.e. the surface situated parallelly to the inner surface of the receptable facing the rocking push means when the removable mirror is housed in the fixed outer frame, forms a concave surface having a contour equal or similar to the one formed by the said inner surface of the receptacle, while the other outer surface of the rocking push means is adapted to be urged by hand allowing removal of the removable mirror when it is housed in the fixed outer frame.

In this way, the housing of the removable mirror in the fixed outer frame is defined between the said facing concave surfaces.

The switching means for supplying the electric illumination means with which the removable mirror is provided and situated in the interior of the receptacle defined by the fixed outer frame, are formed by two opposed projections of essentially right parallelepipedic shape or any other appropriate shape for the contemplated purpose, situated a relatively short distance apart. Said projections are provided with the corresponding terminals of appropriate shape and size for electrical connection by members of known technology, to the motor vehicle battery.

According to a further embodiment of the invention, the removable mirror is characterised in that it is formed by a main body of sufficient volume to contain the electric illumination means and a dry battery with sufficient capacity for supplying said illumination means.

The main body of the removable mirror, which is essentially a right parallelepiped open on one of the longer sides thereof, is formed by a base body and by a rear cover, both produced from plastics materials of appropriate mechanical properties, which may be coupled together by the joint action of a sufficient number of engaging tabs and corresponding retaining apertures in the rear cover and the base body respectively.

According to a further embodiment of the invention, the base body is also provided with ventilation apertures of sufficient number and size to maintain the temperature inside the removable mirror at an appropriate level for the correct operation of the components housed therein, as well as mirror retaining supports and the corresponding apertures allowing the snug passage of the switching projections mounted in the fixed outer frame when the removable mirror is located in the housing defined by the fixed outer frame.

According to a further embodiment of the invention, the shorter side surfaces perpendicular to the longitudinal axis of the main body of the removable mirror are preferably provided along the whole length thereof with a surface of convex contour which snugly fits with the corresponding concave contours forming one of the external surfaces of the L-shaped rocking push means and the inner surface of the receptacle defined by the fixed outer frame facing it.

According to a further embodiment of the invention, the mirror is firmly attached to a translucent material which preferably forms a frame for said mirror although both may logically adopt other mutual configurations equally appropriate for the proposed purpose.

Both the mirror and the translucent material to which it is attached are, in turn, firmly attached, by processes and materials of known technology, to the free edge of the open side of the said main body and defined in the base body.

The electric illumination means housed in the interior of the main body of the removable mirror are formed by one or several standard incandescent lamps and by discretional switching and electrical connexion members of known technology. In view of their nature and situation in the interior of said main body, said electrical connexion members allow the actuation of the switching projections housed in the fixed outer frame when the removable mirror is located in the housing defined in the fixed outer frame, the said lamps being located relative to the translucent material so as to optimise the external illumination of the immediate environment of the mirror, comprising also an operating member directly associated with the discretional switching member which projects to the exterior and is operatable at will.

### Brief Description of the Drawings

The removable mirror device for motor vehicle interiors of the invention is represented in the sheets of drawings attached hereto. In the drawings:
Figure 1 is a front view of the object of the invention showing an internal distribution of the components thereof.
Figure 2 is a cross-section view on the line II-II of Figure 1.
Figures 3 and 4 are front views of corresponding complementary members forming part of the device of the invention.
Figure 5 is a cross-section view on the line V-V of Figure 3.
Figure 6 is a cross-section view on the line VI-VI of Figure 3.
Figure 7 is a cross-section view on the line VII-VII of Figure 4.
Figure 8 is a cross-section view on the line VIII-VIII of Figure 4.
Figure 9 is a cross-section view on the line IX-IX of Figure 3.
Figure 10 is a cross-section view of a member forming the device of the invention.
Figures 11 and 12 show a distribution of the components of the electrical circuit of the device housed in the removable mirror, their interconnexion and their respective operating modes.

### Detailed Description of the Embodiment

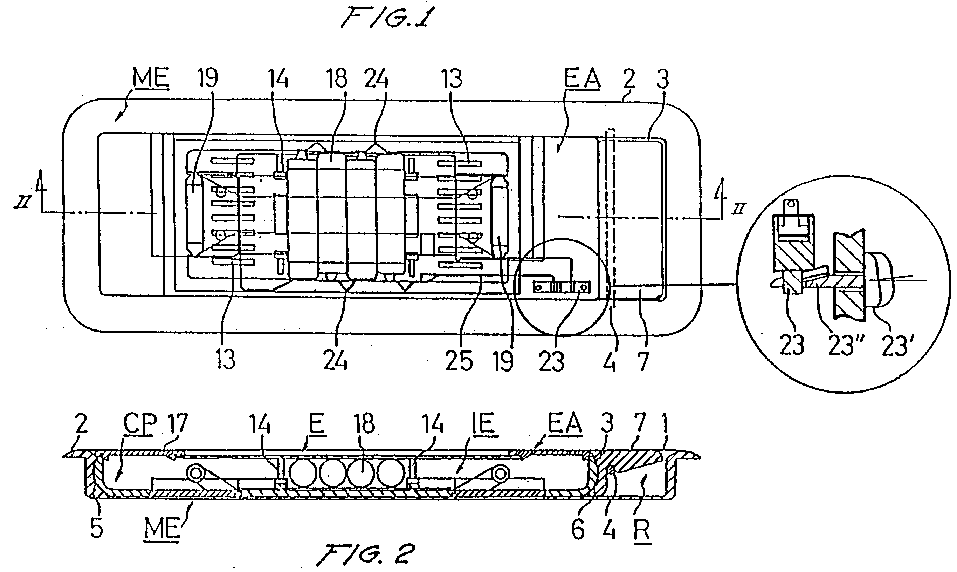

The removable mirror device for motor vehicle interiors of the invention described here as an embodiment is formed as shown in Figures 1 and 2 of the accompanying sheets of drawings by a fixed outer frame ME and by a removable mirror EA.

The fixed outer frame ME, which is one-piece and preferably made from plastics materials having mechanical properties adequate for the contemplated purpose, is formed by an essentially right parallelepipedical receptacle R which is open on one of the larger sides 1, corresponding to the front side in this embodiment, as shown in Figure 2.

In said receptacle R there is disposed, on the free edge of the sides of the parallelepiped forming a dihedron with the side 1, an outer flange 2 extending around the perimeter projecting over a relative small distance perpendicularly to the said sides, as shown in Figures 1 and 2.

The outer flange 2 is for concealing the perimeter, produced by mechanical means and usually of irregular contour, of the opening allowing assembly of the fixed outer frame ME in the sun visor structures of motor vehicles or in the structure of other parts of the vehicle passenger compartment, such as doors or seat backrests (not shown in the drawing sheets).

The retaining and/or ejection means for the removable mirror EA which are disposed in the receptacle R in this embodiment are formed by a rocking push means 3 attached to a transverse shaft 4 extending over the whole length thereof and on which the rocking push means 3 may rock sufficiently in leverlike fashion. Both said members, rocking push means 3 and transverse shaft 4 are situated in one end of the receptacle R with the arrangement shown in Figures 1 and 2. The said retaining and/or ejection means also comprise the concave surface forming the inner side wall 5 of the parallelepiped forming the receptacle R which is facing the rocking push means 3 at the opposite end.

The outer surface 6 of the L-shaped rocking push means 3 which, when the removable mirror EA is housed in the fixed outer frame ME, faces the inner surface 5 of the receptacle R as shown in Figure 2, forms a concave surface having the same profile as the said inner surface 5.

In this way, between both facing concave surfaces there is defined in the interior of the receptacle R of the fixed outer frame ME a housing in which the removable mirror EA may be snugly fit.

The outer surface 7 of the L-shaped rocking push means 3 is for hand operation allowing removal of the removable mirror EA from the housing therefor in the receptacle R.

Figures 1 and 2 of the accompanying drawing sheets corresponding to this embodiment being described show in detail how the removable mirror EA is located in the housing therefor in the fixed outer frame ME.

Also disposed in the receptale R of the fixed outer frame ME are the two switching projections 8, shown in Figure 12. In this embodiment they are essentially right parallelepipedic in shape and are provided with corresponding terminals 8t which are optionally connected to the motor vehicle battery.

As shown in Figures 1 and 2 of this embodiment, the removable mirror EA is formed by the main body CP, by the mirror E framed in the perimeter thereof by translucent material and by the electric illumination means IE.

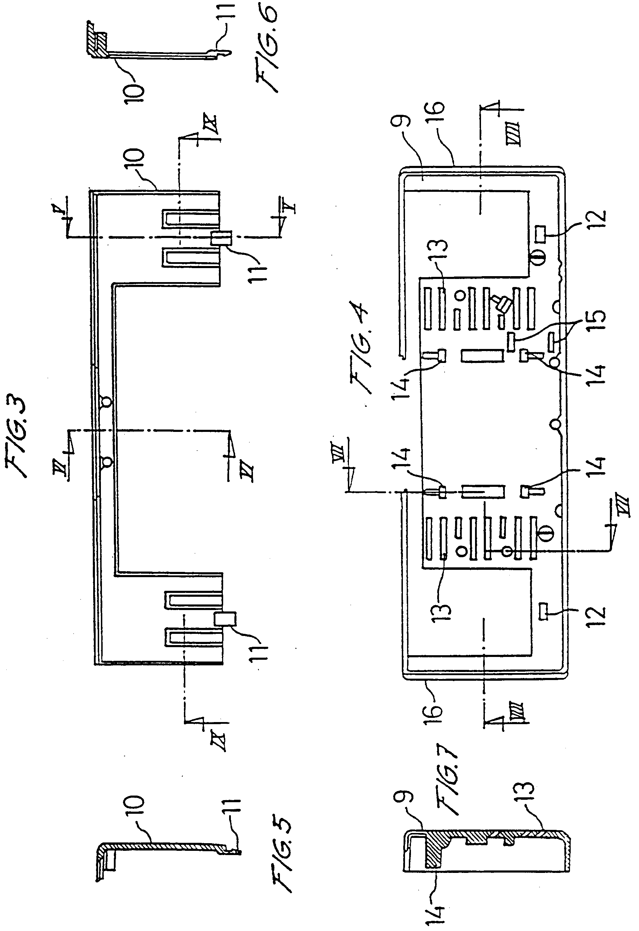

The main body CP is essentially right parallelepipedic in shape open on one of the larger sides thereof, precisely the one containing the mirror E, and is formed by a base body 9 and by a rear cover 10, as shown in Figures 3 and 4 of the accompanying drawing sheets respectively. Both members forming the main body CP are made preferably from plastics materials having mechanical properties adequate for the contemplated purpose.

Both members, base body 9 and rear cover 10, may be coupled together by two engagement tabs 11 and the corresponding retaining apertures 12, disposed in the base body 9 and rear cover 10 respectively and which are suitably dimensioned to ensure both a firm coupling together of both said members and, once coupled together, their discretional separation.

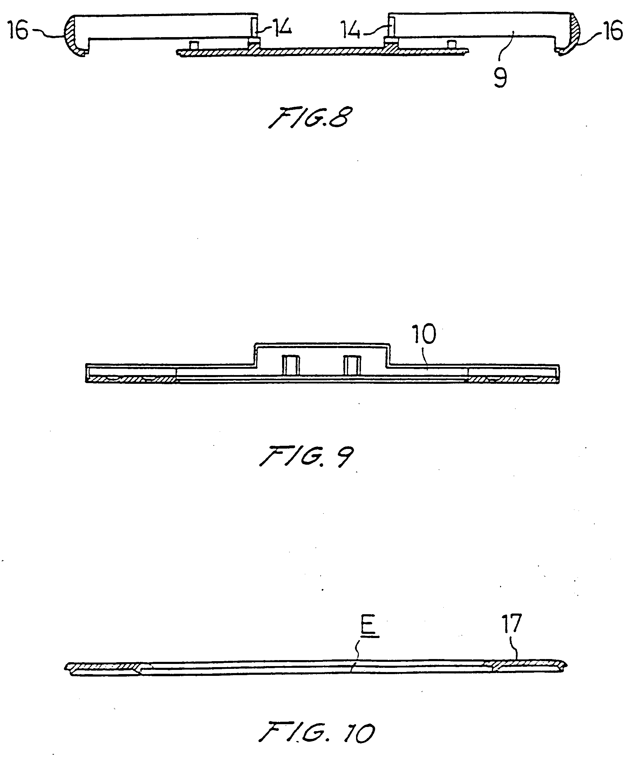

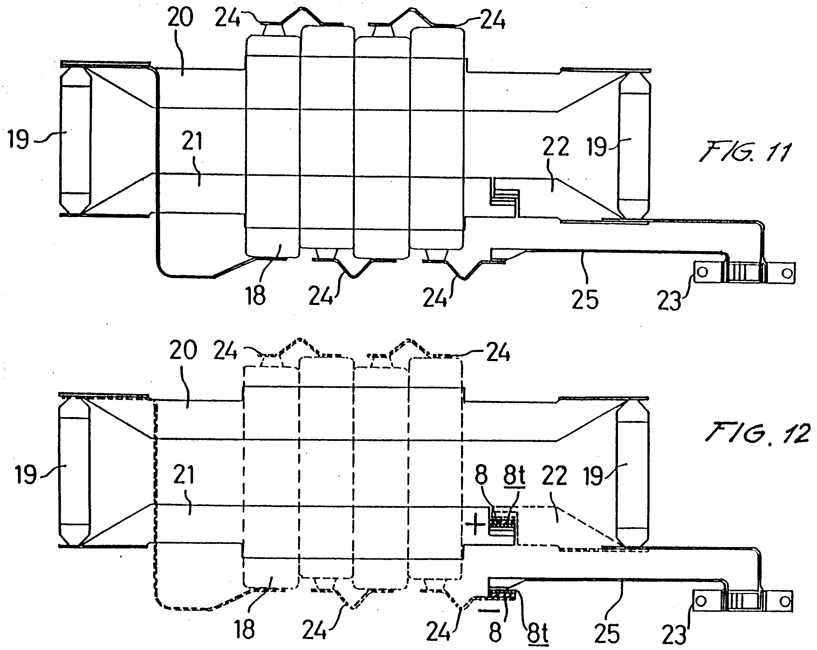

The design of the base body 9 and of the rear cover 10, as shown in detail in Figures 3, 4, 5, 6, 7, 8 and 9, allows access to the interior of the removable mirror EA through the back thereof when both said members are separated, to perform the operations of maintenance and replacement of the unit formed by the components housed therein.

The base body 9 is also provided with ventilation apertures 13 the number and arrangement whereof, shown in Figures 4 and 7 of this embodiment, ensure that, under normal conditions of use of the device of the invention, the temperature reached within the removable mirror EA will be maintained at appropriate levels for the correct operation of the components housed in the interior thereof.

The base body 9 is alwo provided with the four supports 14 which, suitably dimensioned and distributed as shown in Figures 2, 4 and 7 of the accompanying drawing sheets, are for preventing possible vibration of the mirror E caused by the motor vehicle when running.

Figure 4 of this embodiment also shows the two passages 15, disposed in the base body 9, for allowing snug passage therethrough of the corresponding switching projections 8 attached to the respective connexion terminals 8t thereof, disposed in the receptacle R of the fixed outer frame ME, during the insertion and/or removal of the removable mirror EA in or from its housing in the fixed outer frame ME.

The two outer surfaces 16 of the base body 9 forming the main body CP of the removable mirror EA, which are perpendicular to the longitudinal axis of said removable mirror EA, are provided along the whole length thereof, as shown in Figures 2 and 8, with convex surfaces which, respectively, are snugly adapted to the concave surfaces forming the inner surface 5 of the receptacle R and the outer surface 6 of the L-shaped rocking push means 3 situated at one longitudinal end of the fixed outer frame ME.

Such snug fitting of the above described concave and convex surfaces is clearly shown in Figure 2 of the accompanying drawing sheets.

In this way, with the removable mirror EA located in the housing thereof in the receptacle R of the fixed outer frame ME, as shown in Figures 1 and 2, manual operation of the surface 7 of the L-shaped rocking push means 3, which acts as the power arm of a first order lever, causes the said concave and convex surfaces to slide over each other, removing the removable mirror EA from the housing thereof.

The mirror E, of known technology, in the embodiment herein described and as shown in Figures 2 and 10, is framed by a continuous strip of translucent material 17 to which it is firmly attached.

The mirror E and the translucent strip 17 are in turn firmly attached to the main body CP, with both members forming the front surface of the removable mirror EA as shown in detail in Figure 2.

In this way, the inner space of the removable mirror EA, which is defined by the main body CP and the mirror E attached to the translucent frame 17, may house the dry cells 18 used as a power source for supplying the electric illumination means IE, which are also housed in the said inner space.

Figures 11 and 12 of the accompanying drawing sheets show in detail the constituent members, of the electric illumination means IE of the device of the invention, as well as the interconnexion and operation thereof.

The two incandescent lamps, 19 contemplated in this embodiment are connected together and with the supply circuit thereto by metal strips 20, 21 and 22 which simultaneously serve as lampholders.

As shown in Figure 12, with the removable mirror EA in the housing therefor in the receptacle R of the fixed outer frame ME, the two switching projections 8 and the corresponding terminals 8t, which are connected to the motor vehicle battery, supply the incandescent bulbs 19 through the switch 23.

Under these conditions, the two switching projections 8 and corresponding terminals 8t, apart from supplying the incandescent lamps 19, perform the following functions: disconnexion of the dry cells 18 from the supply circuit to the said lamps and the connexion of the latter in series to adapt their operating voltage to the voltage supplied by the motor vehicle battery.

Figure 11 shows in detail how, when the removable mirror EA is not in the housing therefor in the fixed outer frame ME, the two incandescent lamps 19 are supplied through the switch 23 from the dry cells 18 which, as shown in Figures 11 and 12, are connected together in series by the conductors 24.

Under these other conditions, in which the switching projections 8 and the corresponding terminals 8t cease to function as described above, the conductor strips 21-22 and 24-25 provide the following functions in view of their resilience: they connect the dry cells 18 to the supply circuit of the two incandescent lamps 19 and connect said lamps in parallel to adapt their operating voltage to the voltage supplied by the dry cells 18 incorporated in the removable mirror EA.

In this way, the operation of the switching projections 8 and the corresponding terminals 8t allows the electric illumination means IE to be supplied with 12 VDC, which is the voltage usually supplied by the battery equipping motor vehicles, when the removable mirror EA is in the housing therefor in the fixed outer frame ME, while, otherwise, i.e. when the removable mirror EA is removed from the housing therefor in the fixed outer frame ME, the illumination means IE are supplied 6 VDC from the dry cells 18 situated in the removable mirror EA.

With regard to the operation of the switch 23, Figure 1 provides a detail thereof, on a larger scale, showing the operating member 23' which is coupled mechanically to said switch 23 by way of the forked pins 23'' and extends to the exterior so that it may be comfortably operated by the user irrespective of whether the removable mirror EA is located in the fixed outer frame ME or not.

The changes in the voltage supplied to the electric illumination means IE do not imply, under any circumstance whatsoever, a change in the degree of illumination created by the removable mirror EA in the surrounding thereof, since said voltage changes are simultaneously accompanied with the corresponding changes in the interconnexion, in series or in parallel, of the two incandescent lamps 19, whereby the operation voltage of said lamps, which is 6 VDC, remains constant, with the light flux provided by the lamps 19 also remaining constant in this way.

## Claims

1. A removable mirror device for motor vehicle interiors, especially in sun visor structures of motor vehicles, comprising a fixed outer frame (ME) of sufficient size snugly to house therein a mirror (EA) with a corresponding retaining and/or ejection means therefore, as well as switching means (8,8t) for the supply of electric illumination means (IE) for said mirror (EA), wherein
the outer frame (ME) is fixed in the interior of the motor vehicle, especially in a sun visor structure,
the mirror (EA) is removably held in the outer frame (ME) formed by a receptacle (R), the electric illumination means (IE) are situated behind the mirror (EA),
the mirror (EA) is attached to a translucent material (17) wholly or partially framing it, the electric illumination means (IE) provide a diffuse illumination in the immediate environment of the removable mirror (EA),
the electric illumination means (IE) are supplied from the battery of the motor vehicle when the removable mirror (EA) is housed in said fixed outer frame (ME), while said electric illumination means (IE) are supplied by cells (18) incorporated in the removable mirror (EA) itself when the removable mirror (EA) is out of its housing in the fixed outer frame (ME),
**characterized in that**
the cells (18) are dry cells, and in that
the retaining and/or ejection means for the removable mirror (EA) housed in the fixed outer frame (ME) are formed by
an L-shaped rocking push means (3) and
a concave surface,
the L-shaped rocking push means (3) extending transversely to the longitudinal axis of the fixed outer frame (ME), and attached to said frame (ME) by at least one shaft (4) on which it may rock in leverlike fashion,
the concave surface forming the inner surface (5) of the opposite end of said receptacle (R) with respect to said rocking push means (3).

2. The removable mirror device for motor vehicle interiors of claim 1, characterized in that the one-piece fixed outer frame (ME) is formed by an essentially right parallelepipedic hollow receptacle (R) open on one of the larger sides (1) thereof, the front side under conditions of normal use, there being formed on the free edge of said side (1) all around the perimeter thereof a flange (2) of known shape extending externally and perpendicularly to the remaining sides of the parallelepiped forming a dihedron with the side (1).

3. The removable mirror device for motor vehicle interiors of claims 1 or 2, characterized in that the outer surface (6) of the L-shaped rocking push means (3), situated parallelly to the inner surface (5) of the receptacle (R) facing the rocking push means (3) when the removable mirror (EA) is housed in the fixed outer frame (ME), forms a concave surface having a contour equal or similar to the one formed by said inner surface (5) of the receptacle (R), while the other outer surface of the rocking push means (3) is adapted to be urged by hand allowing removal of the removable mirror (EA) from its housing in the fixed outer frame (ME).

4. The removable mirror device for motor vehicle interiors of claims 1 to 3, characterized in that the switching means (8, 8t) for supplying the electric illumination means (IE) situated in the interior of the receptacle (R) defined by the fixed outer frame (ME), are formed by two opposed projections (8) of essentially right parallelepipedic shape or any other appropriate shape for the contemplated purpose, situated a relatively short distance apart, said projections (8) being provided with the corresponding terminals (8t) of appropriate shape and size for the electrical connection to the motor vehicle battery.

5. The removable mirror device for motor vehicle interiors of claims 1 to 4, characterized in that the removable mirror (EA) is formed by a main body (CP) containing the electric illumination means (IE) and dry cells (18) with sufficient capacity for supplying said illumination means (IE).

6. The removable mirror device for motor vehicle interiors of claim 5, characterized in that the main body (CP) comprises a base body (9) and a rear cover (10) which may be coupled together by the joint action of a sufficient number of engaging tabs (22) and corresponding retaining apertures (12) formed in the rear cover (10) and the base body (9) respectively.

7. The removable mirror device for motor vehicle interiors of claim 6, characterized in that the base body (9) is also provided with ventilation apertures (13) of sufficient number and size to maintain the temperature inside the removable mirror (EA) at appropriate levels for the correct operation of the components housed therein, as well as mirror (E) retaining supports (14) and the apertures (15) allowing the snug passage of the switching projections (8) and the corresponding terminals (8t) mounted in the fixed outer frame (ME) when the removable mirror (EA) is located in the housing in the fixed outer frame.

8. The removable mirror device for motor vehicle interiors of claim 6 or 7, characterized in that the two surfaces (16) perpendicular to the longitudinal axis of the main body (CP) of the removable mirror (EA) are provided along their whole length with a convex surface which snugly fits with the corresponding concave surfaces forming one of the external surfaces (6) of the L-shaped rocking push means (3) and the inner surface (5) of the receptacle (R) defined by the fixed outer frame (ME) facing it.

9. The removable mirror device for motor vehicle interiors of claims 6 to 8, characterized in that the mirror (E), is firmly attached to a translucent material (17) which preferably wholly or partially frames it, both members, namely mirror (E) and translucent material (17), being firmly attached to the free edge of the open side of the said main body (CP) forming the removable mirror (EA).

10. The removable mirror device for motor vehicle interiors of claims 6 to 9, characterized in that the electric illumination means (IE) housed in the interior of the main body (CP) of the removable mirror (EA) are formed by one or several incandescent lamps (19) and by discretional switching (23) and electrical connection members (20, 21, 22, 24, 25) which in view of their nature and situation in the interior of said main body (CP) allow the actuation of the switching projections (8, 8t) housed in the fixed outer frame (ME) when the removable mirror (EA) is located in its housing in said frame (ME), said incandescent lamps (19) being located relative to the translucent material (17) so as to optimise the external illumination of the immediate environment of the mirror (E), and characterized by an operating member (23') directly associated with the discretional switching member (23) which projects to the exterior and is manually operable.

## Patentansprüche

1. Abnehmbare Spiegelvorrichtung für den Innenraum von Kraftfahrzeugen, speziell in Sonnenblendenstrukturen von Kraftfahrzeugen, mit einem festen Außenrahmen (ME), der groß genug ist, um darin einen Spiegel (EA) mit einer entsprechenden Aufnahme und/oder Auswurfeinrichtung dafür unterzubringen, sowie Schaltungseinrichtungen (8, 8t) zur Versorgung elektrischer Beleuchtungseinrichtungen (IE) für den Spiegel (EA), wobei
der Außenrahmen (ME) im Inneren des Kraftfahrzeugs befestigt ist, insbesondere in einer Sonnenblendenstruktur,
der Spiegel (EA) abnehmbar im Außenrahmen (ME) gehalten wird, der durch eine Aufnahme (R) gebildet wird,
die elektrischen Beleuchtungseinrichtungen (IE) hinter dem Spiegel (EA) liegen, der Spiegel (EA) an einem lichtdurchlässigen Material (17) befestigt ist, das ihn vollständig oder teilweise umrahmt,
die elektrischen Beleuchtungseinrichtungen (IE) eine gesteuerte bzw. diffuse Beleuchtung in der unmittelbaren Umgebung des abnehmbaren Spiegels (EA) zur Verfügung stellen,
die elektrischen Beleuchtungseinrichtungen (IE) von der Batterie des Kraftfahrzeugs versorgt werden, wenn der abnehmbare Spiegel (EA) in dem festen Außenrahmen (ME) untergebracht ist, während die elektrischen Beleuchtungseinrichtungen (IE) von im abnehmbaren Spiegel (EA) selbst eingebauten Zellen (18) versorgt werden, wenn der abnehmbare Spiegel (EA) sich außerhalb seines Gehäuses im festen Außenrahmen (ME) befindet,
**dadurch gekennzeichnet,** daß
die Zellen (18) Trockenzellen sind, und dadurch, daß
die Halte- und/oder Auswurfeinrichtung für den in festen Außenrahmen (ME) untergebrachten abnehmbaren Spiegel (EA) durch eine L-förmige Druckhebeleinrichtung (3) und eine konkave Oberfläche gebildet werden,
wobei die L-förmige Druckhebeleinrichtung (3) sich quer zur Längsachse des festen Außenrahmens (ME) erstreckt und an dem Rahmen (ME) durch mindestens eine Achse (4) befestigt ist, an welcher sie sich hebelartig hin- und herbewegen kann, und die konkave Oberfläche die innere Oberfläche (5) des gegenüberliegenden Endes der Aufnahme (R) in Bezug auf die Druckhebeleinrichtung (3) ausbildet.

2. Abnehmbare Spiegelvorrichtung für den Innenraum von Kraftfahrzeugen gemäß Anspruch 1, dadurch gekennzeichnet, daß der einteilige feste Außenrahmen (ME) durch eine im wesentlichen rechtwinklig quaderförmige hohle Aufnahme (R) ausgebildet wird, die an einer ihrer größeren Seiten (1) offen ist, nämlich der Vorderseite unter normalen Verwendungsbedingungen, wobei an der freien Kante der Seite (1) um deren gesamten Umfang herum ein Flansch (2) von bekannter Form vorhanden ist, der sich nach außen und senkrecht zu den verbleibenden Seiten des Quaders erstreckt und mit der Seite (1) einen Dieder bildet.

3. Abnehmbare Spiegelvorrichtung für den Innenraum eines Kraftfahrzeugs gemäß den Ansprüchen 1 oder 2, dadurch gekennzeichnet, daß die äußere Oberfläche (6) der L-förmigen Druckhebeleinrichtung (3), die parallel zu der inneren Oberfläche der Aufnahme (R) liegt, welche der Druchhebeleinrichtung (3) zugewandt ist, wenn der abnehmbare Spiegel (EA) in dem festen Außenrahmen (ME) untergebracht ist, eine konkave Oberfläche mit einer Kontur ausbildet, die derjenigen gleicht, die durch die innere Oberfläche (5) der Aufnahme (R) gebildet wird oder ihr ähnlich ist, während die andere äußere Oberfläche der Druckhebeleinrichtung (3) angepaßt ist, um per Hand vorgespannt zu werden, damit der abnehmbare Spiegel (EA) aus seinem Gehäuse im festen Außenrahmen (ME) entnommen werden kann.

4. Abnehmbare Spiegelvorrichtung für den Innenraum von Kraftfahrzeugen gemäß den Ansprüchen 1 bis 3, dadurch gekennzeichnet, daß die Schalteinrichtungen (8, 8t) zur Versorgung der elektrischen Beleuchtungseinrichtungen (IE), die im Inneren der durch den festen Außenrahmen (ME) definierten Aufnahme (R) liegen, durch zwei gegenüberliegende Vorsprünge (8) von im wesentlichen rechtwinkliger Quaderform oder jedweder anderen geeigneten Form für den angestrebten Zweck gebildet werden, die in einem relativ geringen Abstand voneinander liegen, wobei die Vorsprünge (8) mit den entsprechenden Anschlüssen (8t) von geeigneter Form und Größe zur elektrischen Verbindung mit der Kraftfahrzeugbatterie versehen sind.

5. Abnehmbare Spiegelvorrichtung für den Innenraum von Kraftfahrzeugen gemäß den Ansprüchen 1 bis 4, dadurch gekennzeichnet, daß der abnehmbare Spiegel (EA) durch einen Hauptkörper (CP) gebildet wird, der die elektrischen Beleuchtungseinrichtungen (IE) und Trockenzellen (18) mit einer ausreichenden Kapazität zur Versorgung der Beleuchtungseinrichtungen (IE) enthält.

6. Abnehmbare Spiegelvorrichtung für den Innenraum von Kraftfahrzeugen gemäß Anspruch 5, dadurch gekennzeichnet, daß der Hauptkörper (CP) einen Basiskörper (9) und eine hintere Abdeckung (10) aufweist, die durch die Verbindungswirkung einer ausreichenden Anzahl von Eingriffslaschen (22) und entsprechender Halteöffnungen (12) gekoppelt werden können, welche jeweils in der hinteren Abdeckung (10) und im Basiskörper (9) ausgebildet sind.

7. Abnehmbare Spiegelvorrichtung für den Innenraum von Kraftfahrzeugen gemäß Anspruch 6, dadurch gekennzeichnet, daß der Basiskörper (9) ebenfalls mit Ventilationsöffnungen (13) mit ausreichender Anzahl und Größe versehen ist, um die Temperatur innerhalb des abnehmbaren Spiegels (EA) bei geeigneten Werten für die korrekte Funktion der darin untergebrachten Bestandteile zu halten, wobei die Spiegel(E)-Rückhalteträgern (14) und die Öffnungen (15) den eng anliegenden Durchgang der Schaltungsansätze (8) und der entsprechenden Anschlüsse (8t) gestatten, die im festen Außenrahmen (ME) befestigt sind, wenn der abnehmbare Spiegel (EA) sich in dem Gehäuse im festen Außenrahmen befindet.

8. Abnehmbare Spiegelvorrichtung für den Innenraum von Kraftfahrzeugen gemäß Anspruch 6 oder 7, dadurch gekennzeichnet, daß die beiden Oberflächen (16), die senkrecht zur Längsachse des Hauptkörpers (CP) des abnehmbaren Spiegels (EA) liegen, entlang ihrer gesamten Länge mit einer konvexen Oberfläche versehen sind, welche mit den entsprechenden konkaven Oberflächen eine enganliegende Passung ausbildet, die eine der äußeren Oberflächen (6) der L-förmigen Druckhebeleinrichtung (3) und die innere Oberfläche der Aufnahme (R) ausbilden, die durch den ihr zugewandten Außenrahmen (ME) definiert wird.

9. Abnehmbare Spiegelvorrichtung für den Innenraum von Kraftfahrzeugen gemäß den Ansprüchen 6 bis 8, dadurch gekennzeichnet, daß der Spiegel (E) fest an einem lichtdurchlässigen Material (17) befestigt ist, welches ihn vorzugsweise vollständig oder teilweise umrahmt, wobei beide Bauteile, nämlich der Spiegel (E) und das lichtdurchlässige Material (17), fest an der freien Kante der offenen Seite des Hauptkörpers (CP) befestigt sind, der den abnehmbaren Spiegel (EA) ausbildet.

10. Abnehmbare Spiegelvorrichtung für den Innenraum von Kraftfahrzeugen gemäß den Ansprüchen 6 bis 9, dadurch gekennzeichnet, daß die im Inneren des Hauptkörpers (CP) des abnehmbaren Spiegels (EA) untergebrachten elektrischen Beleuchtungseinrichtungen (IE) durch eine oder mehrere Glühlampen (19) und durch beliebig betätigbare bzw. diskrete Schaltungsbauteile (23) und elektrische Verbindungsbauteile (20, 21, 22, 24, 25) ausgebildet werden, welche in Hinsicht auf ihre Natur und die Situation im Inneren des Hauptkörpers (CP) die Betätigung der im festen Außenrahmen (ME) untergebrachten Schaltansätze (8, 8t) gestatten, wenn der abnehmbare Spiegel (EA) in seinem Gehäuse im Rahmen (ME) angeordnet ist, wobei die Glühlampen (19) relativ zum lichtdurchlässigen Material (17) so angeordnet sind, daß die Außenbeleuchtung der unmittelbaren Umgebung des Spiegels optimiert wird, und gekennzeichnet durch ein Betätigungsbauteil (23'), das direkt dem nach diskreten Bauteil (23) zugeordnet ist, welches nach außen vorsteht und manuell betätigbar ist.

## Revendications

1. Dispositif de miroir amovible pour montage à l'intérieur des véhicules automobiles, en particulier dans des structures de paresoleil de véhicules automobiles, comprenant une monture extérieure fixe (ME) de dimensions suffisantes pour pouvoir loger, de manière bien ajustée, un miroir (EA), avec des moyens de retenue et/ou d'éjection pour celui-ci, ainsi que des organes de commutation (8,8t) assurant l'alimentation de moyens d'éclairage électriques (IE) dudit miroir (EA), système dans lequel la monture extérieure (ME) est fixée à l'intérieur du véhicule automobile, notamment dans une structure de pare-soleil, le miroir (EA) est retenu de façon amovible dans la monture extérieure (ME) formée par un réceptacle (R),
les moyens d'éclairage électriques (IE) se trouvent derrière le miroir (EA),
le miroir (EA) est fixé à une matière translucide (17) qui l'encadre entièrement ou partiellement,
les moyens d'éclairage électriques (IE) produisent un éclairage diffus aux abords immédiats du miroir amovible (EA),
les moyens d'éclairage électriques (IE) sont alimentés par la batterie du véhicule automobile lorsque le miroir amovible (EA) est logé dans ladite monture extérieure fixe (ME), tandis que ces moyens d'éclairage électriques (IE) sont alimentés par des piles (18) incorporées dans le miroir amovible (EA) proprement dit, quand le miroir amovible (EA) est sorti de son logement ménagé dans la monture extérieure fixe (ME),
dispositif caractérisé en ce que
les piles (18) sont des piles sèches, et en ce que
les moyens de retenue et/ou d'éjection pour le miroir amovible (EA) logé dans la monture extérieure fixe (ME) sont constitués par un poussoir à bascule (3) en forme de L et une surface concave, ce poussoir à bascule (3) en forme de L s'étendant transversalement à l'axe longitudinal de la monture extérieure fixe (ME), et étant rattaché à cette monture (ME) par au moins une tige (4) sur laquelle il peut basculer à la manière d'un levier, la surface concave constituant la surface intérieure (5) de l'extrémité dudit réceptacle (R) située à l'opposé du poussoir à bascule (3) précité.

2. Dispositif de miroir amovible pour montage à l'intérieur de véhicules automobiles selon la revendication 1, caractérisé en ce que la monture extérieure fixe monobloc (ME) est formée par un réceptacle creux (R) essentiellement parallélépipédique droit, ouvert sur l'un de ses plus grands côtés (1), le côté avant dans des conditions d'utilisation normale, le bord libre dudit côté (1) présentant, sur tout son périmètre, une collerette (2) de forme connue, s'étendant extérieurement et perpendiculairement aux autres côtés du parallélépipède, en formant un dièdre avec le côté (1).

3. Dispositif de miroir amovible pour montage à l'intérieur de véhicules automobiles selon les revendications 1 ou 2, caractérisé en ce que la surface extérieure (6) du poussoir à bascule (3) en forme de L, orientée parallèlement à la surface intérieure (5) du réceptacle (R) faisant face au poussoir à bascule (3) lorsque le miroir amovible (EA) se trouve logé dans la monture extérieure fixe (ME), forme une surface concave ayant un contour égal ou similaire à celui formé par ladite surface intérieure (5) du réceptacle (R), tandis que l'autre surface extérieure du poussoir à bascule (3) est adaptée pour pouvoir être poussée à la main, permettant l'enlèvement du miroir amovible (EA) de son logement dans la monture extérieure fixe (ME).

4. Dispositif de miroir amovible pour montage à l'intérieur de véhicules automobiles selon les revendications 1 à 3, caractérisé en ce que les organes de commutation (8,8t) assurant l'alimentation des moyens d'éclairage électriques (IE) se trouvant à l'intérieur du réceptacle (R) défini par la monture extérieure fixe (ME), sont constitués par deux saillies opposées (8) de forme essentiellement parallélépipédique droite ou de toute autre forme appropriée en vue de l'utilisation envisagée, espacées d'une distance relativement courte, lesdites saillies (8) étant dotées des bornes correspondantes (8t), de forme et de dimensions appropriées pour assurer la connexion électrique à la batterie du véhicule automobile.

5. Dispositif de miroir amovible pour montage à l'intérieur des véhicules automobiles selon les revendications 1 à 4, caractérisé en ce que le miroir amovible (EA) est constitué d'un corps principal (CP) contenant les moyens d'éclairage électriques (IE) et des piles sèches (18) ayant une capacité suffisante pour alimenter lesdits moyens d'éclairage (IE).

6. Dispositif de miroir amovible pour montage à l'intérieur des véhicules automobiles selon la revendication 5, caractérisé en ce que le corps principal (CP) comprend un corps de base (9) et un élément de recouvrement arrière (10) susceptibles d'être raccordés par l'action combinée d'un nombre suffisant d'ailettes d'accouplement (22) et de lentes de retenue (12) correspondantes, formées, respectivement, sur l'élément de recouvrement arrière (10) et dans le corps de base (9).

7. Dispositif de miroir amovible pour montage à l'intérieur des véhicules automobiles selon la revendication 6, caractérisé en ce que le corps de base (9) est également pourvu de lentes d'aération (13) en nombre et de dimensions suffisant à maintenir la température intérieure du miroir amovible (EA) à un niveau convenable pour le fonctionnement correct des composants qu'il renferme, ainsi que de supports (14) de retenue du miroir (E), et de fentes (15) assurant le passage bien ajusté des saillies de commutation (8) et des bornes correspondantes (8t) logées dans la monture extérieure fixe (ME) lorsque le miroir amovible (EA) se trouve dans le logement ménagé dans la monture extérieure fixe.

8. Dispositif de miroir amovible pour montage à l'intérieur des véhicules automobiles selon l'une des revendications 6 ou 7, caractérisé en ce que les deux surfaces (16) perpendiculaires à l'axe longitudinal du corps principal (CP) du miroir amovible (EA) sont pourvues, sur toute leur longueur, d'une surface convexe qui s'adapte de façon bien ajustée aux surfaces concaves correspondantes constituant l'une des surfaces extérieures (6) du poussoir à bascule (3) en forme de L, et la surface intérieure (5) du réceptacle (R) définie par la monture extérieure fixe (ME) lui faisant face.

9. Dispositif de miroir amovible pour montage à l'intérieur de véhicules automobiles selon les revendications 6 à 8, caractérisé en ce que le miroir (E) est fermement attaché à une matière translucide (17) qui l'encadre complètement, de préférence, ou partiellement, ces deux éléments, à savoir le miroir (E) et la matière translucide (17), étant fermement attachés au bord libre du côté ouvert du corps principal (CP) constituant le miroir amovible (EA).

10. Dispositif de miroir amovible pour montage à l'intérieur de véhicules automobiles selon les revendications 6 à 9, caractérisé en ce que les moyens d'éclairage électriques (IE) logés à l'intérieur du corps principal (CP) du miroir amovible (EA) sont constitués par une ou plusieurs lampes à incandescence (19) et par des organes de commutation (23) et de connexion électrique (20,21,22,24,25) qui, de par leur nature et leur situation à l'intérieur du corps principal (CP), permettent l'actionnement des saillies de commutation (8,8t) logées dans la monture extérieure fixe (ME) lorsque le miroir amovible (EA) se trouve dans son logement ménagé dans ladite monture (ME), lesdites lampes à incandescence (19) étant agencées par rapport à la matière translucide (17) de façon à optimiser l'éclairage extérieur des abords immédiats du miroir (E), et caractérisé par un organe d'actionnement (23') qui fait saillie à l'extérieur et est actionnable à la main, directement associé à l'organe de commutation (23).
